# DEMANDE DE BREVET EUROPEEN

(11) **EP 0 856 374 A1**
(43) Date de publication de la demande: **05.08.1998**
(21) Numéro de dépôt: 98400157.8
(22) Date de dépôt: 27.01.1998
(51) Int. Cl.: B23K 35/00, B23K 20/16, G21C 13/00

(54) **Procédé d'assemblage par soudage diffusion d'une pièce en béryllium avec une pièce en cuivre ou en alliage de cuivre et assemblage réfractaire ainsi obtenu**

(30) Priorité: 29.01.1997 FR 9700942
(71) Demandeur: COMMISSARIAT A L'ENERGIE ATOMIQUE, 75015 Paris (FR)
(72) Inventeur: Saint-Antonin, François, 38000 Grenoble (FR); Bourgeois, Gérard, 38360 Engins (FR); Le Marois, Gilles, 38000 Grenoble (FR); Burlet, Hélène, 38500 Coublevie (FR)
(74) Mandataire: Dubois-Chabert, Guy

(57) **Abrégé**

L'invention concerne un procédé d'assemblage d'une pièce en béryllium avec une pièce en cuivre ou en alliage de cuivre par soudage diffusion en phase solide dans lequel un matériau intercalaire en titane ou en alliage de titane est placé entre le cuivre ou l'alliage de cuivre et le béryllium afin de réaliser une liaison résistante et réfractaire pouvant être utilisée à température élevée et en ambiance nucléaire.

L'invention concerne également l'assemblage réfractaire ainsi obtenu.

Un tel assemblage trouve en particulier son application dans son module de première paroi pour réacteur de fusion nucléaire.

## Description

La présente invention est relative à un procédé d'assemblage d'une pièce en béryllium avec une pièce en cuivre ou en alliage de cuivre par soudage diffusion en phase solide dans lequel un matériau intercalaire en titane ou en alliage de titane est placé entre le cuivre ou l'alliage de cuivre et le béryllium afin de réaliser une liaison résistante et réfractaire pouvant être utilisée à température élevée et en ambiance nucléaire.

L'invention concerne également l'assemblage réfractaire ainsi obtenu.

Le domaine technique de l'invention peut être défini comme étant le soudage diffusion et en particulier le soudage diffusion de métaux très réactifs et très réfractaires comme le béryllium en vue d'obtenir des assemblages pouvant être utilisés dans des applications nécessitant des montées de température pouvant dépasser par exemple 500°C et pouvant même aller jusqu'à 600°C et au delà.

Le béryllium est un métal présentant une très faible densité, d'excellentes propriétés mécaniques, et des propriétés thermiques exceptionnelles, il possède d'autre part le meilleur pouvoir ralentisseur et réflecteur vis-à-vis des neutrons, ce qui le rend très intéressant par des applications dans les domaines de l'aérospatiale et de l'aéronautique et du nucléaire dans lesquelles il doit être la plupart du temps assemblé à des pièces réalisées dans d'autres métaux ou alliages par exemple en cuivre ou en alliages de cuivre jouant le rôle de drain thermique par exemple dans les modules de première paroi d'un réacteur de fusion nucléaire (« ITER »).

Du fait des températures élevées mise en oeuvre dans les applications des assemblages de pièces en béryllium avec d'autres matériaux, l'assemblage de ces pièces par collage avec des produits organiques est naturellement exclue.

L'assemblage par des moyens mécaniques tels que rivets et autres, nécessite une définition et un calcul très précis de la configuration de ces moyens pour empêcher une rupture pendant l'assemblage ou l'utilisation. D'autre part, les techniques classiques d'assemblage par soudage faisant intervenir un faisceau d'énergie avec ou sans métal d'apport comme le soudage TIG, BE ou Laser et impliquant une fusion partielle des pièces à assembler sont inutilisables, en particulier pour l'assemblage de surfaces importantes où un contact intime et continu, sans porosité, est recherché.

En conséquence, le brasage et le soudage diffusion en phase solide sont actuellement les techniques les plus courantes pour réaliser des assemblages, en particulier de surfaces importantes, entre le béryllium et d'autres matériaux tels que du cuivre ou des alliages de cuivre.

Dans le procédé de brasage un métal ou alliage fusible est placé entre les deux pièces assembler. Ce métal ou alliage de brasage a une température de fusion inférieure à celle des pièces à réunir et mouille le métal ou alliage constitutif des pièces à assembler, et la jonction est réalisée lors du refroidissement par solidification de l'alliage de brasage sur les pièces.

Pour réaliser des assemblages pouvant fonctionner à une température donnée, l'alliage ou métal de brasage doit avoir une température de fusion très supérieure à celle d'utilisation de l'assemblage : une règle communément admise consiste à dire qu'il faut un rapport d'environ 3/5 entre la température de fonctionnement et la température de fusion de l'alliage de brasage exprimée en degrés Kelvin.

Du fait des très grandes réactivités chimiques et métalliques du béryllium, en particulier avec le cuivre et ses alliages, de son caractère extrêmement réfractaire, et à cause de sa très faible mouillabilité, le choix d'alliage ou de métaux de brasage pour assembler du béryllium avec d'autres matériaux est extrêmement difficile et nécessite en particulier un contrôle précis de la réactivité des éléments de la brasure. Sinon, il se produit une dégradation du béryllium.

Les documents de Roy I. Batista, "Brazing of refractory and reactive metals", Welding, Brazing and Soldering ASM Handbook, Vol.6, 1993, p 941. et de M. Schwartz, " Brazing for the engineering technologist ", édité par Chapman et Hall, 1995, p 131. indiquent que les systèmes de brasure pour le béryllium peuvent être choisis parmi le Zinc, l'Aluminium, l'argent et certains de leurs alliages.

Le zinc a l'avantage de ne pas réagir avec le béryllium, et d'avoir une température de brasage suffisamment basse pour éviter sa cristallisation. La résistance au cisaillement est élevée à température ambiante mais diminue fortement pour des températures plus élevées.

Les systèmes à base d'Aluminium sont les plus utilisés, en particulier l'alliage Al-Si, ils présentent les mêmes avantages que le Zinc, avec des températures de brasage de 566 à 605°C pour les alliages Al-Si, et de 645 à 655°C pour l'Aluminium pur. Les brasures ont de bonnes résistances et conviennent seulement pour une utilisation jusqu'à 150°C ce qui est nettement insuffisant pour des assemblages de métaux réfractaires qui doivent fonctionner à température élevée.

Les brasures à base d'argent ou de ses alliages tels que Ag-Cu, Ag-Cu-Sn, Ag-Cu-Li (Ag-7Cu-0,2-Li) conviennent pour des structures exposées à de hautes températures par exemple jusqu'à 500°C et même 870°C, du fait de la température de brasage élevée qui est par exemple de 640 à 804°C pour des alliages Ag-Cu et peut atteindre de 882 à 954°C pour l'argent pur.

L'argent et ses alliages ne réagissent pas avec le béryllium et l'on obtient ainsi des joints résistants du fait que les intermétalliques durs ou cassants ne subsistent pas lors du refroidissement.

L'argent présente cependant l'inconvénient majeur de se transmuter très facilement en cadmium sous l'action d'un flux de neutron et il n'est donc pas recommandé pour des applications nucléaires, en effet, le cadmium a une température de fusion très basse (320°C) ce qui limite la température d'utilisation après une certaine durée-de fonctionnement. De plus, la tension de vapeur du cadmium est élevée : il a donc une très forte tendance à l'évaporation.

D'autres documents décrivent l'utilisation d'alliages de brasage sans argent pour l'assemblage notamment entre le béryllium et des alliages de cuivre ou des aciers inoxydables.

Ainsi l'article de B.A Kalin, V.T.Fedotov, O.N. Sevryukov, A.E. Grigoryev, A.N. Plyuschev, V.M. Ivanov, Yu.S. Strebkov, "Application of Amorphous and Microcrystalline Filler Metals for Brazing of Beryllium with Metals", Proceedings of the 7th International Conference on Fusion Reactor Materials, Obninsk, Russie, 25-29 sept. 1995 décrit-il des brasures en métaux amorphes et microcristallins de type "ruban", pour le brasage du béryllium avec des métaux tels que le cuivre, l'acier inox et le vanadium.

Les brasures utilisées sont Al-Si, Zr-Ti-Be-Fe, ou des alliages à base de Cu-Sn-In tels que Cu-Sn-Mn-In-Ni et Cu-Sn-In-Ni.

Du fait des particularités structurales de ces brasures, les températures de brasage utilisées dans ce document sont généralement supérieures à 800°C, et il est nécessaire de réaliser l'assemblage de manière rapide avec des durées de brasage n'excédant pas au plus vingt minutes, et dans des installations réservées uniquement à ce procédé. En effet, à cause de la toxicité du béryllium sous forme pulvérulente, de telles installations sont définitivement polluées et ne peuvent être utilisées pour d'autres applications. Le procédé devient ainsi très onéreux, en tenant compte des règles très strictes régissant les rejets de béryllium dans l'atmosphère.

Le document de A.T.Peacock, "Development of silver free bonding methods for joining Be to CuCrZr". ITER Working Meeting on Materials, Garching, Allemagne, 13-16 Mai 1996 est également relatif à un procédé de brasage (brasage réactif) de béryllium avec un alliage CuCrZr qui met en oeuvre une brasure sans argent 60 Cu-9Mn-30 Sn-1 Ce, le Ce jouant le rôle d'élément réactif.

Le brasage est réalisé à une température unique de 725°C sous vide, de ce fait, et selon la règle des 3/5 énoncée plus haut, la température de fonctionnement de l'assemblage obtenu ne peut excéder 450°C. Eu égard au fait que le temps de brasage doit être très rapide, par exemple de 20 secondes à 5 minutes, et bien contrôlé pour éviter une trop grande réactivité de l'alliage de brasage avec les substrats à assembler, le procédé de brasage décrit dans ce document est extrêmement délicat à maîtriser, notamment pour des pièces de tailles importantes pour lesquelles il y a une inertie thermique.

Un problème généralement rencontré lors du brasage du béryllium est sa très mauvaise mouillabilité qui nécessite le dépôt ou le plaquage de métaux tels que le titane, le nickel ou le cuivre sur le béryllium préalablement à l'opération de brasage, il est mentionné dans le premier document cité plus haut que lorsque des alliages pulvérulents sont utilisés des ajouts d'hydrure de titane ont été effectués.

Selon les "Techniques de l'Ingénieur" pages M 715-7, le soudage diffusion peut être défini comme un procédé de soudage en phase solide dans lequel les pièces à assembler, maintenues en contact sous une pression adaptée, sont portées et maintenues à une température suffisamment élevée pour que la diffusion des atomes à travers le plan de joint, aidée par les déformations plastiques locales, puisse assurer la continuité métallique.

L'utilisation de la technique d'assemblage par soudage diffusion dans un conteneur ou une enveloppe permet d'éviter les inconvénients liés à la vaporisation du béryllium car la pièce est enfermée de manière étanche. Il n'est donc pas nécessaire d'avoir recours à un système complexe d'aspiration et de filtration des effluents gazeux.

De plus, la réalisation d'assemblage par soudage diffusion permet de réaliser une jonction à une température relativement basse par rapport à la température de fonctionnement et donc de ne pas faire subir un traitement thermique pouvant modifier la structure des matériaux à assembler.

La sensibilité aux variations de temps de maintien est faible dans ce procédé car la réactivité est contrôlée lors de la diffusion des éléments chimiques.

Le document de D.L. Youchison, R. Guiniiatouline, R.D.Waston, J.M. McDonald, B.E. Mills et D.R Boehme, "Thermal fatigue testing of a diffusion-bonded beryllium divertor mock-up under ITER relevant conditions", Proceedings of the 18th Symposium on Fusion Technology edited by K.Herschbach, W. Mauer et J.E. Vetter, Karlsruhe, Germany, 22-26 Aug. 1994, pp 287-290. décrit la réalisation de jonctions par soudage diffusion directement entre du béryllium et du cuivre sous forme d'un alliage CuCrZr. Il se produit la formation de composés intermétalliques du type Be₂Cu au voisinage du Be, et BeCu au voisinage du Cu qui rendent l'assemblage fragile.

L'assemblage direct par soudage diffusion du béryllium avec d'autres matériaux et en particulier les alliages de cuivre est donc à écarter dans tous les cas, car il y a généralement formation d'intermétalliques, par exemple de type bérylliure de cuivre, de stoechiométries diverses, qui sont extrêmement fragiles, et qui entraînent la formation de fissures au niveau de la jonction. Donc, dans le cas d'un assemblage hétérogène mettant en jeu du béryllium et d'autres matériaux tels que des alliages de cuivre, il est nécessaire de placer un ou plusieurs matériaux entre le béryllium et le/les matériaux que l'on souhaite assembler sur ce métal.

Ces matériaux dits matériaux "intercalaires" ont pour but de séparer physiquement les matériaux à assembler, et d'éviter ou de contrôler la réaction entre le béryllium et les matériaux tel que le cuivre et ses alliages avec lesquels il doit être assemblé, en formant une barrière de diffusion.

Ainsi, l'article de E. Visca, G. Ceccotti, B. Riccardi, G. Mercurio, "Technologies of joining between ITER reference grade beryllium and copper alloys by diffusion bonding process", Proceedings of the 19th Symposium on Fusion Technology, Lisboa, Portugal, 16-20 sept. 1996, décrit-il l'assemblage par soudage diffusion de béryllium et d'alliages de cuivre tels que du GLIDCOP® A125 et du CuCrZr dans lequel on utilise comme matériau intercalaire du cuivre déposé par plaquage électrolytique, afin de remplacer l'argent jusqu'alors utilisé et écarté pour les raisons mentionnées plus haut. L'assemblage est en fait réalisé par soudage diffusion entre le cuivre déposé et l'alliage de cuivre. Il est précisé que l'assemblage entre le béryllium et l'alliage de cuivre chrome-zirconium ne peut être porté à une température supérieure à 460°C, sinon il y a formation de composés intermétalliques entre le cuivre et le béryllium qui rendent le joint fragile et font qu'il peut se rompre très facilement.

Le document de F. Saint-Antonin, D. Barberi, G. Le Marois, A. Laillé, "Development and characterization of Be/Cu joint obtained by Hot Isostatic Pressing", Proceedings of the 19th Symposium on Fusion Technology, Lisboa, Portugal, 16-20 Sept. 1996, décrit l'assemblage par soudage-diffusion de béryllium et de cuivre mettant en oeuvre la compaction isostatique à chaud (CIC).

L'assemblage direct entre le cuivre et le béryllium étant impossible, des intercalaires jouant le rôle de barrières de diffusion pour les jonctions entre Be et Cu à faible température, sont décrits.

Les barrières de diffusion pour le cuivre sont choisis parmi W, Cr et Mo et les barrières de diffusion pour le béryllium sont choisis parmi Al ou Mg. Un tel assemblage ne peut pas fonctionner à des températures au-dessus de 400°C car l'aluminium a une température de fusion de 660°C.

Enfin dans la plupart des procédés décrits ci-dessus, il reste souvent une porosité résiduelle au niveau de la fonction, en particulier lors de l'assemblage de pièces avec une grande surface de contact.

Il existe donc actuellement un besoin pour un procédé permettant entre autres de réaliser des liaisons fortes par soudage-diffusion entre une pièce en béryllium et une pièce en cuivre ou alliage de cuivre, la liaison obtenue pouvant être utilisée à température élevée, c'est-à-dire pouvant dépasser par exemple 500°C et pouvant même aller jusqu'à 600°C et au delà ; et en ambiance nucléaire.

En effet les procédés d'assemblage par soudage-diffusion décrits dans les documents de l'art antérieur ne permettent en aucun cas de réaliser de telles liaisons et de tels assemblages car comme on l'a déjà mentionné les liaisons, jonctions obtenues sont cassantes, fragiles, présentent des fissures et des pores résiduels et/ou ne peuvent pas supporter les températures élevées et les ambiances nucléaires décrites ci-dessus.

Ainsi, la mise en oeuvre d'un matériau intercalaire à base d'Ag, Cu, Al ou autre métal ou alliage entre le béryllium et le cuivre ou alliage de cuivre, n'a pas permis de résoudre ce problème de manière satisfaisante, du fait notamment que l'utilisation de l'Argent est proscrite en milieu nucléaire.

Le fait de savoir si un matériau tel qu'un métal ou un alliage de métal convient comme matériau intercalaire entre un alliage et/ou un métal et un autre alliage et/ou un autre métal spécifiques est totalement imprévisible, et ne peut se déduire en aucun cas du comportement d'autres matériaux intercalaires dans le même contexte, ou de la mise en oeuvre de ce matériau comme matériau intercalaire pour assembler d'autres métaux ou alliages.

L'invention a donc pour objectif de fournir un procédé d'assemblage d'une pièce en béryllium avec une pièce en cuivre ou en alliage de cuivre par soudage diffusion en phase solide dans lequel un matériau intercalaire est placé entre le cuivre ou l'alliage de cuivre et le béryllium qui satisfait, entre autres à l'ensemble des besoins et critères mentionnés ci-dessus et qui élimine les inconvénients rencontrés avec les procédés de l'art antérieur décrit plus haut.

Cet objectif et d'autres encore, sont atteints, selon, l'invention par un procédé d'assemblage d'une pièce en béryllium avec une pièce en cuivre ou en alliage de cuivre, par soudage-diffusion en phase solide, dans lequel un matériau intercalaire est placé entre le béryllium et le cuivre ou l'alliage de cuivre, caractérisé en ce que ledit matériau intercalaire est constitué de titane ou d'un alliage de titane.

Le procédé selon l'invention dans lequel ledit matériau intercalaire est constitué de manière surprenante de titane ou d'un alliage de titane tel que par exemple Ta6V ou TiAl 90/10 satisfait entre autres à l'ensemble des exigences et des critères mentionnés plus haut, ne présente pas les inconvénients des procédés de l'art antérieur et permet de préparer des jonctions (joints ou liaisons) et assemblages répondant également aux exigences citées.

L'utilisation du titane ou d'un alliage de titane tel que par exemple Ta6V ou TiAl 90/10, dans le cadre d'un procédé de soudage diffusion, et en particulier comme matériau intercalaire spécifique pour l'assemblage entre du cuivre ou un alliage de cuivre et de béryllium, n'est ni décrite ni suggérée dans les documents de l'art antérieur cités plus haut. Une telle utilisation est totalement inattendue, en vertu notamment du principe d'imprévisibilité régissant le comportement d'un matériau en tant qu'intercalaire entre deux métaux ou alliages spécifiques.

Cette utilisation est d'autant plus surprenante que le caractère très réactif du titane dissuadait à priori l'homme du métier de le mettre en oeuvre comme matériau intercalaire avec le béryllium.

D'autre part, les inventeurs ont mis en évidence, de manière surprenante, que l'utilisation, conformément au procédé de l'invention d'un matériau intercalaire spécifique en titane ou en alliage de titane permet de contrôler la réactivité chimique qui par exemple dans le cas d'une liaison directe entre le béryllium et le cuivre ou un alliage de cuivre conduit à la formation d'intermétalliques fragiles qui causent la formation de fissures, tandis que des pores sont souvent présents.

Lors de la formation de l'assemblage avec présence de titane ou d'alliage de titane entre le béryllium et le cuivre ou l'alliage de cuivre, il y a certes formation de composés intermétalliques de type bérylliure de titane, d'intermétalliques entre le cuivre et le titane et enfin d'intermétalliques ternaires entre le béryllium, le cuivre et le titane mais on a constaté de manière surprenante, que la présence de ces intermétalliques n'entraînait pas la formation de fissures et qu'il n'y avait pas de porosité détectable alors que le titane et le béryllium sont très réactifs et induisent une dégradation des matériaux avec lesquels ils sont en présence.

Le procédé selon l'invention de par la définition même du soudage diffusion est réalisé à une pression et à une température suffisante pour former un assemblage réfractaire, résistant, entre les pièces, cette pression et cette température étant maintenues pendant une durée suffisante pour former l'assemblage.

Le procédé de soudage diffusion selon l'invention présente l'avantage de conduire à des assemblages réfractaires non seulement résistant à température ambiante mais pouvant résister ainsi par exemple à des températures de 500°C et même jusqu'à 600°C et au delà, du fait que l'assemblage réfractaire entre le béryllium et le cuivre ou l'alliage de cuivre est généralement réalisé à une température élevée par exemple de 750 à 850°C, de préférence d'environ 800°C.

Par "résistant", on entend notamment que l'assemblage, la jonction réalisée présente une excellente tenue mécanique (à toutes températures) définie en particulier par une excellente résistance au cisaillement.

Le procédé selon l'invention permet d'assembler le béryllium et le cuivre ou les alliages de cuivre en phase solide, on limite de ce fait, par l'utilisation d'une température moyenne, les phénomènes de réaction chimique due à la présence de béryllium.

Du fait qu'une pression est appliquée lors de la réalisation du soudage diffusion la porosité résiduelle est limitée, le procédé selon l'invention permet ainsi de réaliser en particulier des assemblages de pièces avec de grandes surfaces de contact où un contact intime et continu est recherché.

Le procédé selon l'invention est avantageusement réalisé sous atmosphère inerte ou dans un conteneur ou enveloppe étanche dans lequel on a réalisé le vide. La présence du conteneur évite ainsi entre autres les phénomènes de pollution toxique des installations dues aux émanations de béryllium.

L'invention concerne également l'assemblage réfractaire obtenu par le procédé décrit plus haut.

Cet assemblage présente, outre les propriétés déjà citées plus haut, l'avantage de ne pas comporter d'argent, instable sous flux neutronique. L'assemblage pourra donc être utilisé dans une ambiance nucléaire sous flux neutronique car le titane s'active peu. De plus, il n'y a pas d'évolution chimique de la jonction lors du fonctionnement. En outre, les assemblages selon l'invention sont peu sensibles à des variations de temps de maintien à la température de brasage.

Les assemblages préparés par le procédé selon l'invention sont globalement caractérisés par leur très grande stabilité mécanique et chimique.

D'autres caractéristiques et avantages de l'invention ressortiront mieux à la lecture de la description qui va suivre, donnée à titre illustratif et non limitatif. Le procédé de l'invention consiste donc à assembler une pièce en béryllium avec une pièce en cuivre ou en alliage de cuivre.

Il est bien évident que pour des raisons de commodités, on décrit le cas de l'assemblage de deux pièces mais le nombre des pièces à assembler peut être supérieur à 2, on peut ainsi assembler simultanément un plus grand nombre de pièces.

Par pièce en cuivre ou en alliage de cuivre ou en béryllium, on entend généralement tout élément, ou entité de forme quelconque entrant par exemple, après assemblage simultané ou non avec une ou plusieurs autres pièces, dans des structures de plus grande dimension.

Par alliage de cuivre, on entend tout alliage contenant du cuivre quelqu'en soit la proportion, à titre d'exemple on peut citer les alliages de type GLIDCOP® tel que le GLIDCOP® IG0 qui est un alliage de cuivre, d'alumine, dans les proportions suivantes : Al 0,25% en poids, Oxygène 0,02% en poids, balance cuivre, ou un alliage CuCrZr, ou encore CuNiBe.

Par pièce en béryllium, on entend une pièce réalisée en béryllium pur ou ne contenant qu'une très faible quantité d'élément ajouté, par exemple on sait que du calcium en une proportion pouvant aller jusqu'à 0,5% permet d'améliorer la résistance du béryllium à la corrosion. Le procédé selon l'invention peut aussi s'appliquer aux alliages de béryllium.

Le procédé selon l'invention comprend généralement les étapes suivantes : nettoyage des surfaces des pièces à assembler, assemblage (mise en place) des surfaces des pièces à assembler avec le matériau intercalaire par exemple dans un conteneur, réalisation du soudage diffusion par exemple par compaction (compression) isostatique à chaud, et enfin, éventuellement, ouverture du conteneur.

Ainsi, le procédé selon l'invention comprend tout d'abord de préférence le nettoyage des deux surfaces des pièces en cuivre ou en alliage de cuivre et en béryllium à assembler.

Le nettoyage est particulièrement important du fait de la très haute réactivité d'un métal réfractaire et réactif tel que le béryllium et permet notamment d'éliminer les impuretés susceptibles de gêner la diffusion.

Le nettoyage de la surface de la ou des pièce(s) en béryllium peut par exemple comprendre les étapes suivantes :
- dégraissage dans un solvant organique par exemple du type cétone, éther, ester, alcool, alcane ou alcène chloré tel que le trichloroéthylène, ou un mélange de ceux-ci etc. Un solvant préféré est le trichloroéthylène.
- décapage à l'acide d'une solution acide, de préférence un bain d'acide fluorhydrique à 10%, on pourra aussi utiliser un mélange de 1 à 5% d'acide fluorhydrique avec 30% à 40% d'acide nitrique.
   La durée du décapage est par exemple de 10 secondes à 5 minutes, de préférence de 20 à 30 secondes à une température de 15 à 30°C par exemple de 20°C.
- Rinçage de la surface décapée de la pièce en béryllium par exemple dans un ou plusieurs bains successifs, de préférence dans deux bains successifs d'eau permutée.
- Rinçage final par exemple dans de l'éthanol.
- Séchage par exemple par balayage d'air chaud.

Le nettoyage de la surface de la ou des pièce(s) en cuivre peut par exemple comprendre les étapes suivantes:
- Dégraissage dans un solvant organique par exemple du type cétone, éther, ester, alcool, alcane ou alcène fluoré ou un mélange de ceux-ci etc.

Un solvant préféré est l'acétone ou le mélange ternaire acétone-alcool éthylique-éther, de préférence dans les proportions 1/3,1/3,1/3
- Le dégraissage est éventuellement suivi d'un passage aux ultrasons pendant une durée par exemple de 1 minute.
- Rinçage par exemple dans l'éthanol de préférence sous ultrasons pendant une durée par exemple de 1 minute.
- Séchage par exemple à l'air chaud.
- Décapage, de préférence à l'aide d'un bain de bichromate de potassium à une concentration de préférence de 0,23 à 0,30 mole/litre, d'acide sulfurique à une concentration de préférence de 0,1 à 0,13 mole/litre, et d'eau déminéralisée pendant une durée de 1 à 3 minutes de préférence de 1 minute 30 secondes.
- Rinçage par exemple dans l'éthanol de préférence sous ultrasons.
- Rinçage à l'eau déminéralisée.
- Séchage par exemple à l'air chaud.

Il est préférable de stocker la pièce ainsi nettoyée par exemple sous vide primaire ou dans un dessiccateur avec du gel de silice ou encore sous argon.

Le matériau intercalaire, lorsqu'il se présente par exemple sous la forme d'une feuille de titane ou d'alliage de titane tel que par exemple Ta6V ou TiAl 90/10 est également nettoyé, c'est-à-dire qu'il subit d'abord un dégraissage de sa surface avec de l'éthanol puis un rinçage avec de l'eau permutée.

Les opérations de nettoyage décrite ci-dessus doivent être réalisées de préférence juste avant la mise en place des pièces dans le conteneur lorsque le soudage diffusion est réalisé, par exemple, par compaction (compression) isostatique à chaud (CIC). Ainsi, le temps entre le nettoyage des surfaces et la fermeture du conteneur ne doit pas par exemple excéder un jour pour limiter les risques d'oxydation.

Le procédé selon l'invention comprend ensuite l'assemblage (ici employé au sens de mise en place, positionnement) des pièces et du matériau intercalaire dans le conteneur, encore appelé gaine ou enveloppe.

On intercale le matériau intercalaire, se présentant par exemple sous la forme d' une feuille d'une épaisseur par exemple de 30 à 150 micromètres (µm) entre le béryllium et le cuivre ou l'alliage de cuivre. Il est bien évident que d'autres techniques peuvent être utilisées pour placer le titane ou l'alliage de titane entre le béryllium et le cuivre ou l'alliage de cuivre, on peut par exemple réaliser le dépôt du titane ou de l'alliage de titane sur le béryllium et/ou le cuivre ou l'alliage de cuivre par tout procédé connu convenant à cet effet tel que le dépôt physique en phase vapeur (PVD), la pulvérisation cathodique "sputtering", l'évaporation, etc...

Le dépôt ainsi réalisé aura généralement une épaisseur de 30 à 150 µm.

On place de préférence cet "empilement" dans un conteneur réalisé en un matériau convenable, choisi de façon à résister à l'opération ultérieure par exemple de "compaction" ou compression à chaud par exemple à une température de 800°C. De ce fait, le matériau est choisi de préférence parmi l'acier doux, l'acier inoxydable, le titane et ses alliages.

Ce conteneur (cette gaine ou enveloppe) est réalisée de manière classique et connue de l'homme du métier, l'épaisseur de l'enveloppe doit d'autre part être suffisante pour résister à la pression à laquelle elle est soumise lors de l'opération ultérieure. Cette épaisseur peut être facilement déterminée par l'homme du métier, et sera de préférence, supérieure à 1 mm, de préférence encore comprise entre 2 mm et 20 mm, l'épaisseur préférée est par exemple de 3 mm.

Le conteneur permet en particulier d'isoler l'assemblage de l'atmosphère et de limiter encore la porosité.

Du fait du caractère très réactif des alliages et métaux mis en oeuvre, un anti-diffusant, encore appelé barrière de diffusion peut être placé entre d'une part le conteneur, et d'autre part les pièces en cuivre ou en alliage de cuivre et en béryllium et le matériau intercalaire, pour limiter la diffusion entre ces métaux ou alliages et le conteneur.

Cet anti-diffusant peut être du graphite ou encore des produits connus sous le nom de "stop-off" dans les ouvrages en langue anglaise. Il peut s'agir par exemple d'un oxyde métallique, par exemple d'alumine, de zircone, d'yttrine ou de leurs mélanges. Cette barrière de diffusion peut être déposée par toute technique connue, par exemple on peut effectuer ce dépôt par peinture d'une suspension de poudre du composé formant une barrière de diffusion dans un solvant adéquate, par exemple une suspension de poudre d'alumine dans de l'alcool. On peut également interposer entre le conteneur et les pièces à assembler un isolant thermique formant également le rôle de barrière de diffusion, cet isolant consistant par exemple en une feuille métallique, ou en un feutre de fibre minérale et étant choisi de façon à ne pas réagir avec le cuivre, ou l'alliage de cuivre et le béryllium.

Généralement, on réalise ensuite un dégazage à chaud, de préférence à une température de 120°C et sous vide à savoir de préférence un vide de 10⁻⁵ mbar.

A ce stade, on fait de préférence un vide poussé à l'intérieur du conteneur en particulier pour éliminer toute trace d'oxygène.

Le conteneur est ensuite fermé par soudage lorsque l'on a atteint un vide par exemple de 10⁻⁵ mbar.

Afin d'effectuer cette opération de soudage et de fermeture du conteneur, on pourra par exemple placer le conteneur dans une enceinte de soudage par faisceau d'électron ou bien par soudage TIG en maintenant le vide dans le conteneur.

Il est nécessaire de vérifier que les soudures du conteneur sont étanches avant la réalisation de l'opération de soudage-diffusion par exemple en pratiquant un test à l'hélium.

On pourra également réaliser le soudage en atmosphère neutre telle que de l'argon.

Selon l'invention le soudage-diffusion est par définition, réalisé par un traitement à une pression et à une température suffisantes pour former un assemblage, une liaison résistante et réfractaire.

Cette température et cette pression sont généralement de 750 à 850°C, de préférence environ 800°C, et de 100 à 150 MPa de préférence environ 120 MPa.

De même, la durée pendant laquelle on maintient cette température et cette pression sera généralement de 2 à 4 heures, de préférence environ 3 heures.

De préférence, selon l'invention, le soudage-diffusion est réalisé par un traitement thermomécanique du type compression uniaxiale ou isostatique à chaud, cette dernière étant préférée.

Le traitement cité plus haut peut également consister en un cycle de traitement comportant plusieurs phases réalisées à des températures, à des pressions et avec des durées différentes.

Ainsi, le conteneur pourra-t-il être placé dans la chambre d'une machine pouvant permettre de réaliser un cycle tel qu'un cycle de CIC suivant :
- montée à 800°C et 1200 bars (120 MPa) en 3 heures,
- maintien à 800°C et 1200 bars (120 Mpa) pendant 2 heures,
- descente à 350°C et 30 bars (3 Mpa) en deux heures,
- maintien à 350°C et 30 bars (3 Mpa) pendant 3 heures,
- descente naturelle depuis ce dernier palier jusqu'à la température et la pression ambiantes.

Enfin, à la suite de l'étape de soudage-diffusion, le produit obtenu c'est-à-dire l'assemblage de la pièce en cuivre ou en alliage de cuivre et de la pièce en béryllium, comportant un joint réalisé à partir d'un intercalaire en titane ou en alliage de titane, est généralement soumis à une opération de dégainage ou d'ouverture du conteneur.

Le conteneur est de préférence enlevé par découpe au fil à l'électro-érosion pour éviter d'endommager le béryllium et la jonction.

Les assemblages de pièces en cuivre ou en alliage de cuivre et en béryllium préparés par le procédé selon l'invention trouvent leur application dans toutes les structures, appareils, composants ayant en particulier des températures d'utilisation élevées c'est-à-dire par exemple égales ou supérieures à 500°C.

Ces applications sont en particulier celles dans lesquelles on met à profit les excellentes propriétés notamment mécaniques et thermiques du béryllium par exemple pour des structures aéronautiques ou spatiales. En outre, du fait que les assemblages selon l'invention ne comportent pas d'argent ou d'autre métal susceptibles de subir une transmutation sous flux neutronique, ils peuvent être utilisés pour des applications dans le domaine nucléaire.

Par exemple, le béryllium possède des propriétés intéressantes comme matériau de première paroi dans un réacteur de fusion nucléaire car il est conducteur de la chaleur et il ne pollue pas le plasma dans lequel la réaction de fusion nucléaire se produit. D'autre part, le cuivre et les alliages de cuivre sont bons conducteurs de la chaleur et sont utilisés dans ce réacteur comme matériau caloporteur. Ces deux matériaux entrent dans la fabrication de modules de première paroi pour réacteur de fusion nucléaire. Grâce au procédé selon l'invention on peut ainsi réaliser une jonction continue entre le béryllium et l'alliage de cuivre pour que se produise un bon transfert de chaleur entre le béryllium, qui est au contact du plasma dégageant de la chaleur, et l'alliage de cuivre qui est utilisé comme matériau permettant d'évacuer les calories.

Une telle application des assemblages selon l'invention avec une jonction continu, intime, sur une surface importante, soumise à des flux neutroniques importants, et à des contraintes thermiques très élevées démontre tous les avantages découlant de la mise en oeuvre de la présente invention.

L'invention va maintenant être décrite au moyen des exemples suivants donnés bien entendu à titre illustratif et non limitatif.

### EXEMPLE 1

Cet exemple concerne la préparation et la tenue mécanique d'un assemblage, entre d'une part une pièce en béryllium et d'autre part une pièce en alliage de cuivre GLIDCOP®, obtenu en mettant en oeuvre le procédé selon l'invention, en utilisant un matériau intercalaire en titane.

Les pièces en béryllium et en GLIDCOP sont des parallélépipèdes de 10 mm x 10 mm x 5 mm et le matériau intercalaire se présente sous la forme d'une feuille de titane d'une épaisseur de 50 µm.
a) Nettoyage des surfaces à assembler
   Le nettoyage de l'alliage de cuivre a consisté à réaliser les opérations suivantes:
   - dégraissage à l'aide d'un mélange ternaire : 1/3 éthanol, 1/3 acétone, 1/3 éther, suivi d'un passage aux ultrasons pendant une minute,
   - séchage à l'air chaud,
   - décépage pendant une minute 30 dans le bain suivant :
      - bichromate de potassium K₂Cr₂O₇ : 0,26 mole/litre
      - acide sulfurique H₂SO₄ :0,115 mole/litre
      - eau déminéralisée
   - rinçage à l'éthanol sous ultrasons pendant une minute,
   - rinçage à l'eau déminéralisée,
   - séchage sous air chaud,
   - stockage sous vide primaire ou dans un dessiccateur avec du gel de silice ou encore sous argon. Dans cet exemple, le stockage s'est fait sous argon.

   Le nettoyage du béryllium a consisté à réaliser les opérations suivantes :
   - dégraissage dans un bain de trichloro-éthylène,
   - décapage pendant 30 secondes dans un bain de 10% HF réalisé à partir d'une solution à 40% de HF.
   - rinçage dans deux bains successifs d'eau permutée,
   - rinçage final dans de l'éthanol,
   - séchage.

   Le matériau intercalaire sous forme de feuille de titane, est dégraissé avec de l'éthanol puis, par de l'eau permutée.
   On a réalisé ces opérations de nettoyage juste avant l'assemblage des pièces dans le conteneur.
b) Assemblage (mise en place) dans le conteneur
   L'assemblage, la mise en place dans le conteneur a consisté à réaliser les étapes suivantes :
   On a intercalé la feuille de titane d'une épaisseur de 50 µm ente le béryllium et l'alliage de cuivre
   On a placé cet empilement dans un conteneur en acier. Un antidiffusant a été placé entre le conteneur et les pièces en alliage de cuivre et en béryllium pour limiter la diffusion entre ces matériaux et le conteneur. Cet antidiffusant est du graphite.
   On a réalisé un dégazage à chaud à une température de 120°C sous vide.
   On a réalisé un vide poussé dans le conteneur, et on a réalisé le soudage lorsqu'un vide de 10⁻⁵ mbar a été atteint.
   Avant la réalisation du cycle de compaction (compression) isostatique à chaud, on a vérifié que les soudures étaient étanches au vide secondaire (c'est-à-dire à 10⁻⁵ mbar).
c) Réalisation du cycle de compaction isostatique à chaud
   Le conteneur a été placé dans une chambre d'une machine de compaction isostatique à chaud et on a réalisé le cycle suivant :
   - montée à 800°C et 1200 bars (120 Mpa) en 3 heures,
   - maintien à 800°C et 1200 bars (120MPa) pendant 2 heures,
   - descente à 350°C et 30 bars (3 Mpa) en deux heures,
   - maintien à 350°C et 30 bars (3 Mpa) pendant 3 heures
   - descente naturelle depuis ce dernier palier jusqu'à la température et la pression ambiantes.
d) Ouverture du conteneur Le conteneur a été enlevé par découpe au fil à l'électro-érosion pour éviter d'endommager le béryllium et la jonction.
e) Evaluation de l'assemblage obtenu
   On a réalisé un test mécanique en cisaillement sur la jonction (l'assemblage) béryllium/Glidcop^{®} préparée par le procédé ci-dessus, conforme à l'invention, avec un matériau intercalaire en titane de 50 µm d'épaisseur. La rupture à température ambiante a été obtenue à 108 Mpa.
   On a réalisé le même type d'essai sur du béryllium seul et sur du Glidcop^{®} seul a été réalisé : la rupture a été obtenue respectivement, à 270 Mpa et 218 Mpa, ce qui indique que la jonction possède une résistance mécanique au cisaillement d'environ 50% du matériau assemblé de plus faible résistance quand il est cisaillé seul.

### EXEMPLE 2

Cet exemple concerne, comme l'exemple 1, la préparation et la tenue mécanique d'un assemblage entre une pièce en béryllium et une pièce en alliage de cuivre GLIDCOP^{®} obtenu en mettant en oeuvre le procédé selon l'invention, en utilisant un matériau intercalaire en titane.

La pièce en béryllium est un parallélépipède de 88 mm x 96 mm x 10 mm et la pièce en GLIDCOP^{®} est un parallélépipède de 88 mm x 96 mm x 20 mm dont l'épaisseur de 20 mm est traversée, parallèlement à l'interface GLIDCOP^{®}/béryllium, par 4 tubes d'un diamètre intérieur de 10 mm. Ces 4 tubes sont centrés à 11 mm de l'interface GLIDCOP^{®}/béryllium. Le matériau intercalaire est une feuille de titane de 50 mm d'épaisseur.

Toutes les opérations de nettoyage des surfaces à assembler, d'assemblage (mise en place) dans le conteneur, de réalisation de la compaction isostatique à chaud, et d'ouverture du conteneur sont les mêmes que celles décrites dans l'exemple n°1.

Les tests mécaniques en cisaillement sont comparables.

## Revendications

1. Procédé d'assemblage d'une pièce en béryllium ou en alliage de béryllium avec une pièce en cuivre ou en alliage de cuivre, par soudage diffusion en phase solide, dans lequel un matériau intercalaire est placé entre le béryllium ou l'alliage de béryllium et le cuivre ou l'alliage de cuivre, caractérisé en ce que ledit matériau intercalaire est constitué de titane ou d'un alliage de titane.

2. Procédé selon la revendication 1 caractérisé en ce que le soudage diffusion est réalisé à une température de 750 à 850°C.

3. Procédé selon la revendication 2 caractérisé en ce que le soudage diffusion est réalisé à une température d'environ 800°C.

4. Procédé selon la revendication 1 caractérisé en ce que le soudage diffusion est réalisé à une pression de 100 à 150 Mpa.

5. Procédé selon les revendications 2 et 4 caractérisé en ce que lesdites températures et pressions sont maintenues pendant une durée de 2 à 4 heures.

6. Procédé selon la revendication 1 caractérisé en ce que le soudage diffusion est réalisé dans un conteneur ou enveloppe étanche, ou sous atmosphère inerte.

7. Procédé selon la revendication 1 caractérisé en ce que l'alliage de cuivre est choisi parmi les alliages de Glidcop^{®}, de CuCrZr et de CuNiBe.

8. Procédé selon la revendication 1 caractérisé en ce que l'alliage de titane est choisi parmi les alliages Ta6V, et Titane Aluminium 90/10.

9. Procédé selon la revendication 1 caractérisé en ce que le matériau intercalaire est placé entre le béryllium ou l'alliage de béryllium et le cuivre ou l'alliage de cuivre sous la forme d'une feuille de titane ou d'alliage de titane.

10. Procédé selon la revendication 9 caractérisé en ce que ladite feuille de titane ou d'alliage de titane a une épaisseur de 30 à 150 µm.

11. Procédé selon la revendication 1 caractérisé en ce que le matériau intercalaire est placé entre le béryllium ou l'alliage de béryllium et le cuivre ou l'alliage de cuivre par dépôt du titane ou de l'alliage de titane sur le béryllium ou l'alliage de béryllium et/ou le cuivre ou l'alliage de cuivre.

12. Procédé selon la revendication 11 caractérisé en ce que le dépôt du titane ou de l'alliage de titane est réalisé par dépôt physique en phase vapeur (PVD), par pulvérisation cathodique ou par évaporation.

13. Procédé selon la revendication 6 caractérisé en ce que le soudage diffusion est réalisé par compaction (compression) isostatique à chaud (CIC).

14. Procédé selon la revendication 6 caractérisé en ce que le soudage diffusion est réalisé par compression uniaxiale.

15. Procédé selon la revendication 13 caractérisé en ce que le soudage diffusion est réalisé par compression isostatique à chaud suivant le cycle suivant :
- montée à 800°C et 1200 bars (120 Mpa) en 3 heures,
- maintien à 800°C et 1200 bars (120 MPa) pendant 2 heures,
- descente à 350°C et 30 bars (3 Mpa) en deux heures,
- maintien à 350°C et 30 bars (3 Mpa) pendant 3 heures
- descente naturelle depuis ce dernier palier jusqu'à la température et la pression ambiantes.

16. Procédé selon la revendication 1 caractérisé en ce qu'il comprend les étapes de nettoyage des surfaces des pièces à assembler, mise en place des surfaces des pièces à assembler avec le matériau intercalaire, et de réalisation du soudage diffusion.

17. Assemblage réfractaire obtenu par le procédé selon l'une quelconque des revendications 1 à 16.

18. Assemblage selon la revendication 17 caractérisé en ce que ledit assemblage fait partie d'un module de première paroi pour réacteur de fusion nucléaire.
